(19) Europäisches Patentamt
European Patent Office
Office européen des brevets

(11) EP 3 207 075 B1

(12) # EUROPÄISCHE PATENTSCHRIFT

(45) Veröffentlichungstag und Bekanntmachung des Hinweises auf die Patenterteilung:
**07.12.2022 Patentblatt 2022/49**

(21) Anmeldenummer: **15791511.7**

(22) Anmeldetag: **13.10.2015**

(51) Internationale Patentklassifikation (IPC):
***C08G 59/18*** *(2006.01)* ***C08G 59/50*** *(2006.01)*

(52) Gemeinsame Patentklassifikation (CPC):
**C09D 7/65; C08G 59/184; C08G 59/50**

(86) Internationale Anmeldenummer:
**PCT/EP2015/073705**

(87) Internationale Veröffentlichungsnummer:
**WO 2016/059066 (21.04.2016 Gazette 2016/16)**

(54) **EPOXY-AMIN-ADDUKTE ZUR DISPERGIERUNG VON FESTSTOFFEN**

EPOXY-AMIN- ADDUCTS FOR THE DISPERSION OF SOLIDS

ADDITIFS ÉPOXY-AMINE DESTINÉS À LA DISPERSION DE SOLIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2014 EP 14188894**

(43) Veröffentlichungstag der Anmeldung:
**23.08.2017 Patentblatt 2017/34**

(73) Patentinhaber: **BYK-Chemie GmbH**
**46483 Wesel (DE)**

(72) Erfinder:
- **GÖBELT, Bernd**
  **46487 Wesel (DE)**
- **OMEIS, Jürgen**
  **46286 Dorsten-Lembeck (DE)**
- **OKKEL, Andreas**
  **46483 Wesel (DE)**
- **MEICHSNER, Marcus**
  **47475 Kamp-Lintfort (DE)**
- **RUDOLFI, Astrid**
  **47799 Krefeld (DE)**

(74) Vertreter: **Altana IP Department**
**Altana Management Services GmbH**
**Abelstraße 45**
**46483 Wesel (DE)**

(56) Entgegenhaltungen:
**WO-A1-2011/070074**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 207 075 B1

**Beschreibung**

Die vorliegende Erfindung betrifft die Verwendung eines Copolymers auf Epoxy-Amin-Basis als Netz- und Dispergiermittel, sowie das Copolymer enthaltende Dispersionen und Pigmentzubereitungen.

Als Netz- und Dispergiermittel einsetzbare Addukte auf Epoxy-Amin-Basis sind bereits aus mehreren Patentschriften bekannt.

So beschreibt die EP 1 486 524 A1 die Herstellung von Epoxid-Addukten und deren Salzen zur Verwendung als Dispergiermittel. Insbesondere werden Epoxy-Amin-Addukte beschrieben, die erhältlich sind durch die Umsetzung mono- oder polyfunktioneller, aromatischer Epoxide mit Polyoxyalkylenmonoaminen eines zahlenmittleren Molekulargewichts von mehr als 400 g/mol. Der Umsetzungsgrad der Epoxidgruppen sollte 90 bis 100 % betragen und der Gewichtsanteil der Additionsverbindungen an aromatischen Gruppen sollte nicht mehr als 50 Gew.-% betragen. Ein Einbezug von Diaminen mit primärer und tertiärer Aminogruppe oder basischer heterocyclischer Gruppe bei der Herstellung der Dispergiermittel ist in EP 1 486 524 A1 nicht beschrieben.

Die EP 1 745 104 A1 offenbart kammartige Polyetheralkanolamine als Dispergiermittel für Tinten und Druckfarben. Diese werden wie in der EP 1 486 524 A1 durch Umsetzung von monofunktionell aminterminierten Polyethern mit aliphatischen Polyglycidylethern.

In der WO 2012/049186 werden Kammcopolymere auf der Basis von Epoxy-Amin-Addukten beschrieben, die zwingend Polysiloxanseitenketten aufweisen. Zwar können bei der Herstellung dieser Kammcopolymere zusätzlich auch polysiloxanfreie Amine eingesetzt werden, hierunter auch monoaminfunktionelle Polyoxyalkylenamine oder auch tertiäre und primäre Aminogruppen tragende Diamine, deren Einsatz ist jedoch weder zwingend, noch ist deren Einsatz in Mischung miteinander offenbart.

Die WO 2008/092687 A1 offenbart Netz- und Dispergiermittel auf der Basis von Isocyanatmonoaddukten. Diese werden erhalten durch Umsetzung eines Polyepoxids mit einem aliphatischen oder araliphatischen primären Amin, welches zusätzlich funktionelle Gruppen tragen kann und anschließender Reaktion mit einem Polyethergruppen tragenden Monoisocyanat.

Die WO 2011/070074 A1 beschreibt Kammcopolymere, die erhältlich sind durch die Umsetzung von Diglycidethern mit primäre Amingruppen tragenden Polyoxyalkylenmonoaminen und aliphatischen oder araliphatischen primären Aminen, die auch tertiäre Aminogruppen tragen können. Diese Vorstufen werden mit Ester- und/oder Ethergruppen tragenden Monoisocyanaten umgesetzt, um die in WO 2011/070074 A1 als Zielverbindungen beschriebenen Netz- und Dispergiermittel zu erhalten. Die in der WO 2011/070074 beschriebenen Vorstufen ähneln den in der vorliegenden Erfindung beschrieben Netz- und Dispergiermitteln in Bezug auf die eingesetzten Ausgangsstoffe, jedoch nicht hinsichtlich der zur Herstellung der Netz- und Dispergiermittel der vorliegenden Erfindung erforderlichen Verhältnisse primärer Aminogruppen zu Epoxygruppen der Ausgangsverbindungen.

Den vorbeschriebenen Netz- und Dispergiermitteln ist jedoch gemein, dass sie gerade bei feinteiligen Rußpigmenten zur Erreichung eines ausgeprägten Jetness-Effekts (entsprechend einer sehr intensiven Schwärzung) nicht ausreichen. Zwar nimmt bei schwarz pigmentierten Systemen die Farbtiefe allein durch abnehmende Helligkeit zu, bei der visuellen Beurteilung der Farbtiefe schwarzer Einfärbungen hat jedoch auch der Farbstich einen Einfluss. Für den Normalbeobachter wird durch einen Blaustich die Farbtiefewirkung einer schwarzen Einfärbung subjektiv erhöht, wohingegen durch einen Braunstich bei gleicher Helligkeit die Farbtiefewirkung subjektiv gemindert wird. Die Netz- und Dispergiermittel des Standes der Technik liefern jedoch noch keine optimalen Ergebnisse, was die visuelle Farbtiefewirkung schwarz pigmentierter Systeme betrifft. Erst eine besonders gute Stabilisierung der Primärpartikel von insbesondere Rußpigmenten, erlaubt eine Optimierung des Blautons. Es besteht somit Bedarf an Netz- und Dispergiermitteln, die auch bei besonders schwierigen Dispergieraufgaben zu einer hervorragenden Stabilisierung der Pigmentdispersionen führen.

Die Netz- und Dispergiermittel sollten sowohl in wässrigen als auch in lösemittelbasierten Systemen einsetzbar sein und generell zu einer hervorragenden Dispergierung partikulärer Feststoffe beitragen. Diese äußert sich beispielsweise auch in einer möglichst niedrigen Anfangsviskosität der Systeme nach Einarbeitung der partikulären Feststoffe unter Verwendung der Netz- und Dispergiermittel sowie einer guten Langzeitstabilität der Systeme.

Partikuläre Feststoffe enthaltende Lacke sollten zudem einen hohen Glanz besitzen und sich durch eine sehr hohe Transparenz auszeichnen.

Aufgabe der vorliegenden Erfindung ist somit die Bereitstellung eines qualitativ hochwertigen Netz- und Dispergiermittels mit besonders guten Eigenschaften bezüglich der Stabilisierung von Partikel enthaltenden Dispersionen, insbesondere feinteilige Rußpigmente enthaltenden Dispersionen, zur Erzielung eines hervorragenden Jetness-Effekts.

Die Lösung dieser Aufgabe erfolgt überraschenderweise durch die Verwendung eines Kammcopolymers als Netz- und Dispergiermittel, wobei das Kammpolymer herstellbar ist aus mindestens einem Diglycidylether (A) der allgemeinen Formel (I)

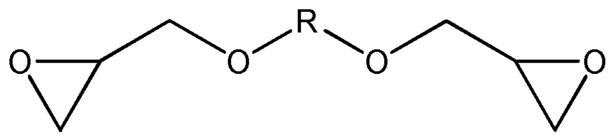

(I),

mindestens einem Polyethermonoamin (B) der allgemeinen Formel (II)

$R^t$-$[OEt]_n[OPr]_m[OBu]_s$-$NH_2$ (II),

mindestens einem Amin (C) der allgemeinen Formel (III)

Z-$R^1$-$NH_2$ (III),

und gegebenenfalls
mindestens einem, von primären Aminogruppen freien, sekundären Amin (D) der allgemeinen Formel (IV)

NHTV (IV)

wobei

R für einen epoxygruppenfreien Rest steht, gewählt aus aliphatischen Resten, aromatischen Resten und araliphatischen Resten,
$R^t$ für einen Rest gewählt aus Alkylresten mit 1 bis 6 Kohlenstoffatomen steht,
OEt für einen Ethylenoxid-Rest, OPr für einen Propylenoxid-Rest und OBu für einen Butylenoxid-Rest steht,
n für eine Zahl von 0 bis 100, m für eine Zahl von 3 bis 50 und s für eine Zahl von 0 bis 20 steht und n+m+s = 3 bis 103 beträgt,
$R^1$ für einen aliphatischen, aromatischen oder araliphatischen Kohlenwasserstoffrest mit 1 bis 12 Kohlenstoffatomen steht,
Z für einen von primären und sekundären Aminogruppen freien Rest mit mindestens einem basischen Stickstoffatom steht,
T und V keine sekundären Aminogruppen enthalten und unabhängig voneinander für aliphatische Reste mit 1 bis 12 Kohlenstoffatomen, aromatische Reste mit 6 bis 12 Kohlenstoffatomen oder araliphatische Reste mit 7 bis 12 Kohlenstoffatomen stehen, dadurch gekennzeichnet, dass
die molare Anzahl der Summe der primären Aminogruppen der Polyethermonoamine (B) und primären Aminogruppen der Amine (C) dividiert durch die molare Anzahl der Epoxy-Gruppen der Diglycidylether (A) einen Wert von ⅓ bis ¾ ergibt,
wobei das Kammpolymer eine Struktur der allgemeinen Formel (V)

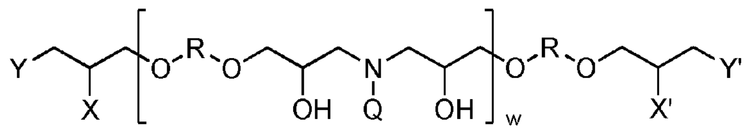

(V)

besitzt, worin
die w+1 Reste R unabhängig voneinander gewählt werden können,
einer der Reste Y und X für OH und der andere Rest für NHQ oder NTV steht einer der Reste Y’ und X’ für OH und der andere Rest für NHQ oder NTV steht, und die Reste Q unabhängig voneinander für
$Q^1 = R^t$-$[OEt]_n[OPr]_m[Bu]_s$ oder $Q_2$ = Z-$R^1$ stehen, und
w für eine Zahl von 1 bis 20 steht,
mit der Maßgabe, dass die Formel (V) mindestens einen Rest $Q^1$ und mindestens einen Rest $Q^2$ enthält.

‚Die Verwendung der obigen Kammcopolymere wird hierin auch als erfindungsgemäße Verwendung bezeichnet. Auch die durch Versalzung, Quarternisierung und/oder Amidierung vorgenannter Kammcopolymere erhaltenen Kammcopolymere zählen hierin zu der erfindungsgemäßen Verwendung der Kammcopolymere. Alle im folgenden in Bezug auf Kammcopolymere verwendeten Konzentrations- und Mengenangaben beziehen sich daher auf die Gesamtheit der Kammcopolymere, unabhängig davon, ob es sich um die Versalzungs-, Quarternisierungs- und/oder Amidierungsprodukte handelt, wie sie insbesondere weiter unten beschrieben sind, oder ob keine dieser weiteren modifizierenden Umsetzungen erfolgt ist.

**Diglycidylether (A)**

Der Diglycidylether (A) der allgemeinen Formel (I)

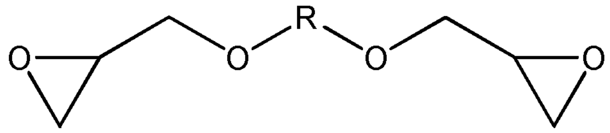

(I)

kann als Rest R einen aliphatischen Rest besitzen. Der Begriff "aliphatisch" umfasst hierbei cyclische und acyclische, gesättigte oder ungesättigte organische Reste, mit Ausnahme aromatischer Reste. Der Rest R kann hierbei Heteroatome, wie beispielsweise und insbesondere Sauerstoffatome und/oder Schwefelatome enthalten.

Ist der Rest R ein acyclischer aliphatischer Rest so steht R vorzugsweise für einen Kohlenwasserstoffrest, insbesondere für einen Alkylenrest mit 2 bis 10, vorzugsweise 4 bis 8 und besonders bevorzugt 4 bis 6 Kohlenstoffatomen, oder für einen Alkylenoxid-Rest umfassend vorzugsweise 1 bis 100, vorzugsweise 1 bis 20 Alkylenoxid-Einheiten, die vorzugsweise gewählt sind aus Ethylenoxid-, Propylenoxid- und Butylenoxid-Einheiten, worunter Ethylenoxid- und Propylenoxid-Einheiten bevorzugt sind. Ist mehr als eine Alkylenoxid-Einheit im Alkylenoxid-Rest enthalten, so spricht man von einem Polyalkylenoxid-Rest. Polyalkylenoxid-Reste enthalten daher vorzugsweise 2 bis 100, besonders bevorzugt 2 bis 20 Alkylenoxid-Einheiten.

Ist der Rest R ein cyclischer aliphatischer Rest, so kann es sich hierbei um einen hydrierten aromatischen oder hydrierten araliphatischen Rest handeln. Prinzipiell sind alle aromatischen und araliphatischen Reste einer Hydrierung zugänglich, insbesondere die weiter unten beschriebenen.

Der Diglycidylether (A) der allgemeinen Formel (I) kann als Rest R einen araliphatischen Rest besitzen. Der Begriff "araliphatisch" umfasst solche Reste R, die sowohl aromatische Gruppen als auch aliphatische Gruppen enthalten.

Handelt es sich beim Rest R um einen araliphatischen Rest, so steht R vorzugsweise für einen Rest $-Ph-CR^4_2-Ph-$, wobei die beiden Reste $R^4$ unabhängig voneinander für Wasserstoff oder eine Alkylgruppe mit 1 bis 4 Kohlenstoffatomen stehen oder einen Rest $-Ph-SO_2-Ph-$ (in letzterem Fall handelt es sich beim Diglycidylether der Formel (I) um Bisphenol-S-diglycidylether). Vorzugsweise stehen beide Reste $R^4$ für eine Methylgruppe oder für Wasserstoff. Sofern beide Reste $R^4$ für eine Methylgruppe stehen, handelt es sich beim Rest R um einen von Bisphenol-A-Rest abgeleiteten Rest und die Verbindung der Formel (I) ist Bisphenol-A-diglycidylether. Sofern beide Reste $R^4$ für Wasserstoff stehen, handelt es sich beim Rest R um einen von Bisphenol-F-Rest abgeleiteten Rest und die Verbindung der Formel (I) ist Bisphenol-F-diglycidylether.

Der Diglycidylether (A) der allgemeinen Formel (I) kann als Rest R auch einen araliphatischen Rest $-Ph-CR^4_2-Ph-[O-CH_2CH(OH)CH_2-O-Ph-CR^4_2-Ph]_p-$ mit p = 1 bis 15, vorzugsweise p = 1 bis 9 enthalten, wobei $R^4$ wie oben definiert ist. Man spricht dann von Epoxid(fest)harzen oder Phenoxyharzen.

Die Gesamtheit der Diglycidylether (A) wird hierin auch als Komponente (A) bezeichnet.

**Polyethermonoamine (B)**

Das Polyethermonoamin (B) der allgemeinen Formel (II)

$$R^t-[OEt]_n[OPr]_m[OBu]_s-NH_2 \qquad (II),$$

besitzt als Rest $R^t$ vorzugsweise einen Alkylrest mit 1 bis 4 Kohlenstoffatomen, besonders bevorzugt ist $R^t$ = Methyl.

Die n [OEt]-, m [OPr]- und s [OBu]-Einheiten können in beliebiger Reihenfolge angeordnet sein. Hierzu zählt insbesondere eine statistische Reihenfolge oder die Anordnung in Form von [OEt]-, [OPr]- und/oder [OBu]-Blöcken oder eine Anordnung in Form eines Gradienten, beispielsweise einer Anreicherung oder Abreicherung von [OEt]- oder den anderen Alkoxy-Einheiten entlang der Polyalkylenoxidkette.

Vorzugsweise gilt n > m > s. Besonders bevorzugt ist s = 0.

Besonders bevorzugt gilt s = 0 und das Verhältnis von n/m > 1, besser > 2 und noch besser > 3, wie beispielsweise 3 bis 50.

Bevorzugt steht n für eine Zahl von 5 bis 75, m für eine Zahl von 3 bis 40 und s für eine Zahl von 0 bis 10. Ganz besonders bevorzugt beträgt die Summe n+m+s = 8 bis 80.

Die Gesamtheit der Polyethermonoamine (B) wird hierin auch als Komponente (B) bezeichnet.

**Amine (C)**

Die Amine (C) der Formel (III) Z-$R^1$-$NH_2$ enthalten neben einer primären Aminogruppe einen Rest Z der frei von primären und sekundären Aminogruppen ist und der mindestens ein basisches Stickstoffatom enthält. Ein basisches Stickstoffatom ist ein solches, welches ein freies Elektronenpaar besitzt und somit ein Proton einer Säure aufnehmen kann. Der Rest Z ist vorzugsweise ein monomerer Rest.

Der Rest $R^1$ steht vorzugsweise für einen aliphatischen Rest mit 1 bis 12 Kohlenstoffatomen, besonders bevorzugt 1 bis 6 Kohlenstoffatomen, ganz besonders bevorzugt 1 bis 4 Kohlenstoffatomen. Besonders bevorzugt handelt es sich bei den aliphatischen Resten $R^1$ um Kohlenwasserstoffreste mit 1 bis 12, vorzugsweise 1 bis 6 und besonders bevorzugt 1 bis 4 Kohlenstoffatomen. Beispiele für besonders bevorzugte Reste $R^1$ sind $CH_2$, $CH_2$-$CH_2$ und $CH_2$-$CH_2$-$CH_2$.

Z steht vorzugsweise für $NR^2R^3$, worin $R^2$ und $R^3$ unabhängig voneinander für aliphatische Reste mit 1 bis 12, besonders bevorzugt 1 bis 4 und ganz besonders bevorzugt 1 oder 2 Kohlenstoffatome stehen. Besonders bevorzugt handelt es sich bei den Resten $R^2$ und $R^3$ unabhängig voneinander um Alkylgruppen mit 1 bis 6, vorzugsweise 1 bis 4 und besonders bevorzugt 1 oder 2 Kohlenstoffatomen. Beispiele besonders bevorzugter Reste Z sind $N(CH_3)_2$ und $N(CH_2CH_3)_2$.

Der von primären und sekundären Aminogruppen freie Rest Z kann auch für einen heterocyclischen Rest stehen, der mindestens ein basisches Stickstoffatom enthält. Vorzugsweise handelt es sich bei dem heterocylischen Rest um einen 5-gliedrigen oder 6-gliedrigen heterocyclischen Rest. Beispiele besonders bevorzugter heterocyclischer Reste Z sind Pyridyl- und Imidazolyl-Reste.

Beispiele besonders bevorzugter Amine (C) sind N,N-Dimethylaminoethylamin, N,N-Dimethylaminopropylamin, N,N-Diethylaminoethylamin, N,N-Diethylaminopropylamin, 2-Aminomethylpyridin, 4-Aminomethylpyridin und N-Aminopropylimidazol.

Die Gesamtheit der Amine (C) wird hierin auch als Komponente (C) bezeichnet.

**Von primären Aminogruppen freie, sekundäre Amine (D)**

Der Einsatz der von primären Aminogruppen freien, sekundären Amine (D) der Formel (IV) NHTV ist fakultativ. Durch deren Einsatz ist es jedoch möglich die Kettenlänge der erfindungsgemäßen Kammcopolymere besser zu steuern, da sie als sogenannte Kettenabbrecher (Terminierer) dienen.

Die Reste T und V enthalten keine sekundären Aminogruppen und stehen unabhängig voneinander für aliphatische Reste mit 1 bis 12 Kohlenstoffatomen, aromatische Reste mit 6 bis 12 Kohlenstoffatomen oder araliphatische Reste mit 7 bis 12 Kohlenstoffatomen. Die Reste T und V können Kohlenwasserstoff-Reste sein, das heißt frei von Heteroatomen sein. Die Reste T und V können jedoch auch Hydroxylgruppen tragen oder Reste Z-$R^1$ darstellen wie sie unter Formel (III) definiert sind.

Beispiele geeigneter sekundärer Amine (D), sind Dialkylamine, wie beispielsweise, Dimethylamin, Diethylamin, Dibutylamin, Di(2-ethylhexyl)amin; Diaralkylamine wie Dibenzylamin; N-Aralkyl-N-Alkylamine wie N-Benzyl-N-methylamin; Di(hydroxyalkyl)amine, wie Diethanolamin und Diisopropanolamin; Bis(dialkylaminoalkyl)amine wie zum Beispiel Bis(dimethylaminopropyl)amin (Jeffcat Z-130); N-Alkyl-N-hydoxyalkylamine, wie Butylethanolamin und Ethylethanolamin; N-Dialkylaminoalkyl-N-alkylamine, wie N-Dimethylaminopropyl-N-methylamin.

Die Gesamtheit der von primären Aminogruppen freien, sekundären Amine (D) wird hierin auch als Komponente (D) bezeichnet.

**Bevorzugte erfindungsgemäß verwendete Kammcopolymere**

Vorzugsweise besitzen die Kammcopolymere eine Struktur der allgemeinen Formel (V)

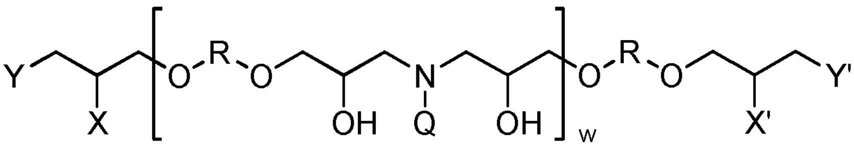

(V)

worin

die w+1 Reste R unabhängig voneinander gewählt werden können und wie in der allgemeinen Formel (I) definiert sind, einer der Reste Y und X für OH, der andere Rest für NHQ oder NTV steht

einer der Reste Y' und X' für OH, der andere Rest für NHQ oder NTV steht,
und die Reste Q unabhängig voneinander für
$Q^1 = R^{t}$-$[OEt]_n[OPr]_m[OBu]_s$ oder $Q^2$ = Z-$R^1$ stehen, worin
$R^t$, OEt, OPr, OBu, n, m und s wie in Formel (II) definiert sind und
Z und $R^1$ wie in Formel (III) definiert sind,
T und V wie in Formel (IV) definiert sind,
und w für eine Zahl von 1 bis 20, vorzugsweise 2 bis 15, besonders bevorzugt 2 bis 10 oder 3 bis 10 steht,
mit der Maßgabe, dass die Formel (V) mindestens einen Rest $Q^1$ und mindestens einen Rest $Q^2$ enthält.

Der Begriff des Kammcopolymers wie er in vorliegender Erfindung verwendet wird lässt sich anhand obiger Struktur der Formel (V) gut erklären. Das Epoxy-Amin-Rückgrat bildet hierbei den Kammrücken, wobei die an die Stickstoffatome des Rückgrats gebundenen Reste Q und gegebenenfalls T und V die Zinken des Kammes darstellen. Im einfachsten Fall (w = 1) besitzt der Kamm zwei terminale Zinken und einen Zinken entlang des Kammrückens, das heißt entlang des Epoxy-Am in-Rückgrats.

Aus obiger Formel (V) ergibt sich für die kürzeste denkbare Hauptkette, das heißt für w = 1, dass das Molekül unter Verwendung von genau zwei Diglycidylethern (A) aufgebaut wird, also insgesamt 4 Epoxygruppen zur Bildung eines solchen Moleküls der Formel (V) umgesetzt werden. Mit der Maßgabe, dass mindestens ein Rest $Q^1$ und mindestens ein Rest $Q^2$ enthalten sein muss, wobei diese über die primären Amine (B) und (C) eingebaut werden, ergibt sich, dass auf die 4 Epoxygruppen mindestens 2 primäre Aminogruppen kommen, die mit diesen umgesetzt werden. Die molare Anzahl der Summe der primären Aminogruppen der eingesetzten Polyethermonoamine (B) und primären Aminogruppen der Amine (C) dividiert durch die molare Anzahl der Epoxy-Gruppen der Diglycidylether (A) beträgt dann genau 0,50. In einem solchen Fall ist genau einer der beiden terminalen Reste ein Rest NTV. Für den Fall, dass der Rest NTV entfällt, steht an dessen Stelle ein Rest NHQ, worin Q für $Q^1$ oder $Q^2$ steht. Dann kommen allerdings 3 primäre Aminogruppen auf 4 Epoxygruppen. Die molare Anzahl der Summe der primären Aminogruppen der eingesetzten Polyethermonoamine (B) und primären Aminogruppen der Amine (C) dividiert durch die molare Anzahl der Epoxy-Gruppen der Diglycidylether (A) beträgt in diesem Fall genau 0,75. Für w = 2, ergibt sich für zwei terminale Reste NTV, dass genau ein Rest $Q^1$ und ein Rest $Q^2$ enthalten sind und sechs Epoxygruppen zur Reaktion kommen, dies markiert die absolute Untergrenze der molaren Anzahl der Summe der primären Aminogruppen der eingesetzten Polyethermonoamine (B) und primären Aminogruppen der Amine (C) dividiert durch die molare Anzahl der Epoxy-Gruppen der Diglycidylether (A), welche ⅓ (bzw. 0,33) beträgt.

In einer bevorzugten Variante wird pro Mol der Komponente (C) maximal ein Mol der Komponente (D) eingesetzt. Besonders bevorzugt werden pro 3 Mol der Komponente (C) maximal ein Mol der Komponente (D) eingesetzt. Ganz besonders bevorzugt werden die Kammcopolymere ausschließlich aus den Komponenten (A), (B) und (C) hergestellt. Für den letztgenannten ganz besonders bevorzugten Fall ist die molare Anzahl der Summe der primären Aminogruppen der eingesetzten Polyethermonoamine (B) und primären Aminogruppen der Amine (C) dividiert durch die molare Anzahl der Epoxy-Gruppen der Diglycidylether (A) immer größer 0,5.

**Versalzungs- und Quarternisierungs-Produkte der Kammcopolymere**

Die Aminogruppen in den Kammcopolymeren, insbesondere die tertiären und sekundären Aminogruppen in den Kammcopolymeren, können mit Säuren zu Ammoniumsalzen und beispielsweise mit Alkylierungsmitteln oder Aralkylierungsmitteln zu quartären Ammoniumverbindungen umgesetzt werden.

Zur Versalzung der Kammcopolymere können organische oder anorganische Säuren und saure Teilester der organischen und anorganischen Säuren verwendet werden. Bevorzugt sind beispielsweise Carbonsäuren, Sulfonsäuren und saure Phosphorsäureester wie beispielsweise deren Mono- und Diester.

Zur Quarternisierung der Kammcopolymere können alle üblichen Quarternisierungsmittel verwendet werden wie beispielsweise Alkylierungsmittel. Beispiele geeigneter Alkylierungsmittel sind Alkyl- und Aralkylhalogenide und -sulfate, wie Benzylchlorid, Methyliodid oder Dimethylsulfat. Es sind aber auch Kombinationen von Mono-Oxiranen und Säuren als Alkylierungsmittel oder Aralkylierungsmittel geeignet, womit hydroxylierte Alkylgruppen bzw. hydroxylierte Aralkylgruppen eingeführt werden. Beispiele für Oxirane sind in diesem Zusammenhang Ethylenoxid, Propylenoxid, Butylenoxid, Styroloxid und Glycidylether, wie Ethylhexylglycidylether, Phenylglycidylether und Kresylglycidylether.

**Amidierungsprodukte der Kammcopolymere**

Sofern die Kammcopolymere mindestens einen terminalen Rest NHQ aufweisen, können beispielsweise Lactone, wie Propiolacton, Valerolacton, Butyrolacton, Caprolacton und/oder alkylierte, insbesondere Methylgruppen tragende Lactone durch Ringöffnung unter Ausbildung einer Amidgruppe mit dem NHQ-Rest reagieren. Die Addition eines Lactonmoleküls wird nach dem Fachmann bekannten Verfahren bei Temperaturen von etwa 70° C bis 180°C durchgeführt. Besonders bevorzugte Lactone sind ε-Caprolacton und δ-Valerolacton. Die Addition mehrerer Lactonmoleküle aneinander durch Ringöffnungspolymerisation ist unerwünscht.

**Synthese der Kammcopolymere**

Der oder die Diglycidylether (A) werden mit dem oder den Polyethermonoaminen (B), dem oder den Aminen (C) und gegebenenfalls dem oder den sekundären Aminen (D) bei Temperaturen zwischen 25°C und 300°C, bevorzugt zwischen 80°C und 200°C und ganz besonders bevorzugt zwischen 100°C und 150°C zur Reaktion gebracht. Hierbei werden entweder alle Komponenten (A), (B), (C) und gegebenenfalls (D) vorgelegt und auf die Reaktionstemperatur erhitzt oder es wird Komponente (A) vorgelegt und die Amin-Komponenten (B), (C) und gegebenenfalls (D) werden als Mischung oder sequenziell hinzugegeben oder über einen Zeitraum zudosiert. In einer bevorzugten Ausführungsform wird Komponente (D) zuletzt zudosiert, um einen Kettenabbruch auszulösen. Im Vergleich zu Reaktionen bei denen nur die Komponenten (A) und (B) zur Reaktion gebracht werden hat die Verwendung der Komponente (C) und, sofern eingesetzt, der Komponente (D) als Reaktionspartner verfahrenstechnisch den positiven Zusatzeffekt, dass sich die Reaktionszeit bis zum vollständigen Umsatz (Epoxyäquivalent ist unendlich) verkürzt und somit Herstellkosten reduziert werden können.

Zu beachten ist hierbei, dass das molare Verhältnis aller primären Aminogruppen der Komponenten (B) und (C), das heißt der Polyethermonoamine (B) und der Amine (C), zu den Epoxidgruppen der Komponente (A), das heißt den Diglycidylethern (A), ⅓ bis ¾, vorzugsweise 0,50 bis 0,70 und besonders bevorzugt 0,50 bis 0,60 beträgt. Wird keine Komponente (D) eingesetzt, so ist die Untergrenze dieses Verhältnisses größer 0,50.

Das molare Verhältnis der Komponente (B) zur Komponente (C) kann in weiten Bereichen variieren. Vorzugsweise beträgt das molare Verhältnis der Komponente (B) zur Komponente (C) 5:1 bis 1:5, besonders bevorzugt 4:1 bis 1:1 und ganz besonders bevorzugt 3:1 bis 1,5:1.

**Erfindungsgemäße Dispersionen**

Die Erfindung betrifft auch Dispersionen, welche ein Dispergiermedium sowie mindestens eine Art eines dispergierten partikulären Feststoffs und mindestens ein Kammcopolymer enthalten. Beim Feststoff handelt es sich vorzugsweise um einen anorganischen oder organischen Füllstoff, ein anorganisches oder organisches Pigment oder um eine von üblichen Füllstoffen und Pigmenten verschiedene Erscheinungsform des Kohlenstoffs, wobei die verschiedenen Erscheinungsformen des Kohlenstoffs hierin mit Ausnahme der Pigmentruße formal zu den Füllstoffen gezählt werden. In der Literatur existiert ebenfalls keine genaue Abgrenzung zwischen Pigmenten und Füllstoffen. Häufig wird jedoch der Brechungsindex (Brechzahl) herangezogen, um zwischen Pigmenten und Füllstoffen zu unterscheiden. Üblicherweise besitzen Pigmente einen Brechungsindex von ≥ 1,7 während der Brechungsindex von Füllstoffen üblicherweise < 1,7. Eine scharfe Unterscheidung dieser Art spielt jedoch im Rahmen der Erfindung keine entscheidende Rolle.

Bezogen auf das Gesamtgewicht der Dispersion werden die Kammcopolymere vorzugsweise in einer Menge von 0,1 bis 10 Gew.-%, besonders bevorzugt 0,3 bis 4,5 Gew.-%, und ganz besonders bevorzugt 0,5 bis 4 Gew.-% eingesetzt.

Bevorzugt liegt die erfindungsgemäße Dispersion als Tinte oder Beschichtungsmittel, insbesondere als Druckfarbe oder Lack, vor.

**Verwendung der Kammcopolymere als Netz- und Dispergiermittel**

Die Erfindung betrifft die Verwendung des Kammcopolymers als Netz- und Dispergiermittel. Die Netz- und Dispergiermittel dienen vorzugsweise zur Erhöhung der Jetness.

Das Kammcopolymer wird insbesondere in den für Dispergiermittel bekannten Einsatzgebieten verwendet. Beispielsweise bei der Herstellung oder Verarbeitung von Lacken, Druckfarben, Papierstrich, Leder- und Textilfarben, Pasten, Pigmentkonzentraten, Keramikmaterialien oder kosmetischen Zubereitungen und zwar insbesondere dann, wenn diese Produkte partikuläre Feststoffe wie Pigmente und/oder Füllstoffe, enthalten.

Auch bei der Herstellung oder Verarbeitung von Gieß- und/oder Formmassen auf Basis von synthetischen, halbsynthetischen oder natürlichen makromolekularen Stoffen wie Polyvinylchlorid, gesättigten oder ungesättigten Polyestern, Polyurethanen, Polystyrolen, Polyacrylaten, Polyamiden, Epoxidharzen, Polyolefinen wie Polyethylen oder Polypropylen, kann das Kammcopolymer eingesetzt werden. Beispielsweise lassen sich entsprechende Kammcopolymere zur Herstellung von Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings und Maler- und Bautenlacken verwenden. Beispiele für übliche Hauptbindemittel in derartigen Systemen sind Harze auf Basis von Polyurethanen, Cellulosenitraten, Celluloseacetobutyraten, Alkydharzen, Melaminharzen, Polyestern, Chlorkautschuken, Epoxidharzen und Acrylatharzen. Beispiele für Beschichtungen auf Wasserbasis sind kathodische oder anodische Elektrotauchlackierungen zum Beispiel für Automobilkarosserien. Weitere Beispiele sind Putze, Silikatfarben, Dispersionsfarben, Wasserlacke auf Basis von wasserverdünnbaren Alkydharzen, Alkydemulsionen, Hybridsystemen, 2-Komponenten-Systemen, Polyurethan- und Acrylat-Dispersionen.

Die Kammcopolymere eignen sich insbesondere auch als Dispergiermittel zur Herstellung von Feststoffkonzentraten, wie Pigmentkonzentraten. Dazu werden beispielsweise die Kammcopolymere in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den Kammcopolymeren ist es aber insbesondere möglich, stabile bindemittelfreie Pigmentkonzentrate herzustellen. Ebenso ist es möglich, mit den Kammcopolymeren fließfähige Feststoffkonzentrate aus Pigmentpresskuchen herzustellen. Hierbei werden dem Presskuchen, der noch organische Lösemittel, Weichmacher und/oder Wasser enthalten kann, die Kammcopolymere zugemischt und die so erhaltene Mischung dispergiert. Die auf verschiedenen Wegen hergestellten Feststoffkonzentrate können dann in unterschiedliche Substrate wie beispielsweise Alkydharze, Polyesterharze, Acrylatharze, Polyurethanharze oder Epoxidharze eingearbeitet werden.

Partikuläre Feststoffe, insbesondere jedoch Pigmente und/oder Füllstoffe, können aber auch lösemittelfrei direkt in den Kammcopolymeren dispergiert werden und eignen sich dann besonders zur Pigmentierung von thermoplastischen und duroplastischen Kunststoffformulierungen.

Die Erfindung betrifft daher auch eine Partikelzubereitung enthaltend 5,0 bis 99,9 Gew.% eines oder mehrerer partikulärer Feststoffe sowie 0,1 bis 95,0 Gew.% eines oder mehrerer Kammcopolymere bezogen auf das Gesamtgewicht der Partikelzubereitung. Bei den Partikelzubereitungen handelt es sich vorzugsweise um Pigmentzubereitungen oder Pigment-Füllstoff-Zubereitungen, auch als Pigmentpräparationen oder Pigment-Füllstoff-Präparationen bezeichnet. Die partikulären Feststoffe, insbesondere die Pigmente und/oder Füllstoffe liegen in den vorgenannten Zubereitungen beziehungsweise Präparationen üblicherweise in höherer Konzentration vor als in den späteren Anwendungen. Als Trägermaterial für die partikulären Feststoffe kann im einfachsten Fall das Kammcopolymer dienen, so dass in einem solchen Fall die Präparationen zu 5,0 bis 99,9 Gew.% aus einem oder mehreren partikulären Feststoffen sowie 0,1 bis 95,0 Gew.% aus einem oder mehreren Kammcopolymeren besteht.

Die Partikelzubereitungen können jedoch auch vom Netz- und Dispergiermittel verschiedene Bindemittel, einschließlich anderer Additive und/oder organische Lösemittel und/oder Wasser enthalten. Die Partikelzubereitungen können in fester Form, beispielsweise als Pulver, Chips oder Granulate oder flüssiger Form vorliegen. Bei flüssigen Pigmentpräparationen oder Pigment-Füllstoff-Präparationen spricht man in Abhängigkeit des Pigmentanteils oder Pigment- und Füllstoffanteils auch von Farbkonzentraten, Pigmentpasten, Volltonpasten, Nuancier- oder Abtönpasten oder von Pigmentteigen.

Die erfindungsgemäßen Partikelzubereitungen, insbesondere die Pigmentzubereitungen oder Pigment-Füllstoff-Zubereitungen werden vorzugsweise bei der Lack-, Druckfarben- und Kunststoffherstellung verwendet.

Die Kammcopolymere können vorteilhaft auch bei der Herstellung von Tinten für "Non-Impact"-Druckverfahren wie "Thermal-Inkjet" und dem "Bubblejet-Verfahren" verwendet werden. Diese Tinten können beispielsweise wässrige Tintenformulierungen, lösemittelbasierte Tintenformulierungen, lösemittelfreie oder lösemittelarme Tinten für UV-Applikationen als auch wachsartige Tinten sein.

Die Kammcopolymere können vorteilhaft auch bei der Herstellung von Farbfiltern für Flüssigkristallanzeigen, -bildschirme, Farbauflösungsgeräte, Sensoren, Plasmabildschirme, Anzeigen auf Basis der SED (Surface conduction Electron emitter Display) und für MLCC (Multi Layer Ceramic Capacitors) verwendet werden. Hierbei kann der flüssige Farbfilterlack, der auch Color Resist genannt wird, durch verschiedenste Applikationsverfahren wie Spin Coating, Aufrakeln, Kombination beider Verfahren oder über "non impact"-Druckverfahren wie zum Beispiel Inkjet-Verfahren aufgetragen werden. Die MLCC-Technologie wird bei der Herstellung von Mikrochips und Leiterplatten verwendet.

Die Kammcopolymere können auch zur Herstellung kosmetischer Zubereitungen wie zum Beispiel Make-up, Puder, Lippenstifte, Haarfärbemittel, Cremes, Nagellacke und Sonnenschutzpräparate verwendet werden. Diese können in den üblichen Formen, wie beispielsweise als W/O- oder O/W-Emulsionen (Water-in-Oil oder Oil-in-Water-Emulsionen), Lösungen, Gele, Cremes, Lotionen oder Sprays, vorliegen. Die Kammcopolymere können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, z.B. organische und anorganische Pigmente wie Titandioxid oder Eisenoxid, enthalten.

Ein derartiges Dispergiermittel kann schließlich auch zur Herstellung eines pigmentierten Überzuges auf einem Substrat verwendet werden, wobei ein pigmentiertes Beschichtungsmittel auf das Substrat aufgebracht wird und wobei das auf das Substrat aufgebrachte pigmentierte Beschichtungsmittel eingebrannt oder anderweitig ausgehärtet bzw. vernetzt wird.

Die Kammcopolymere können alleine oder zusammen mit üblichen Bindemitteln eingesetzt werden. Beim Einsatz in Polyolefinen kann es z. B. vorteilhaft sein, entsprechende niedermolekulare Polyolefine als Trägermaterialien zusammen mit dem Kammcopolymer einzusetzen.

Eine mögliche Verwendung der Kammcopolymere besteht auch in der Herstellung dispergierbarer pulverpartikel- und/oder faserpartikelförmiger Feststoffe, insbesondere von dispergierbaren Pigmenten oder Füllstoffen, insbesondere Kunststofffüllstoffen, wobei die Partikel mit dem Kammcopolymer beschichtet sind. Derartige Beschichtungen von organischen wie auch anorganischen Feststoffen werden in bekannter Weise ausgeführt. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen, z. B. durch Zusatz der Copolymere zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke gegenüber nicht behandelten Pigmenten aus.

Beispiele für im Rahmen der vorliegenden Erfindung geeignete anorganische Pigmente sind Oxid- und Oxidhydroxid- sowie komplexe anorganische Pigmente wie beispielsweise Titandioxidpigmente, Eisenoxidpigmente, Chromoxidpigmente, Bismutvanadatpigmente, komplexe anorganische Buntpigmente beispielsweise mit Rutil- oder Spinellgitter oder oxidische keramische Farbkörper; Sulfid- und Sulfidselenidpigmente wie beispielsweise Zinksulfidpigmente und Cadmiumpigmente; Bleichromatpigmente wie beispielsweise Chromgelbpigmente, Molybdatrotpigmente und Chromgrün- und Chromechtgrünpigmente; Komplexsalzpigmente wie beispielsweise Cyanidpigmente (Eisenblau); Silikatpigmente wie beispielsweise Ultramarinpigmente; Effektpigmente wie beispielsweise plättchenförmige Aluminium-, Goldbronze- und Zinkpigmente, Perlglanzpigmente, Effektpigmente auf Eisenoxidbasis, Effektpigmente auf metallischer Basis, Color Variable Pigmente und cholesterische Effektpigmente; Korrosionsschutzpigmente wie beispielsweise Zinkstaub, Phosphatpigmente, Zinkoxid/Zinkweiß, Eisenglimmer und Korrosionsschutzpigmente auf Titandioxid-Basis; und Pigmentruße wie beispielsweise Furnaceruße, Gasruße und Flammruße.

Beispiele für im Rahmen der vorliegenden Erfindung geeignete organische Pigmente sind Azopigmente wie beispielsweise Monoazopigmente, Diazopigmente, Polyazopigmente und Metallkomplexpigmente; polyzyklische Pigmente wie beispielsweise Kupferphthalocyanine, Diketo-Pyrrolo-Pyrrole (DPP), Chinacridone, Isoindolinone, Isoindoline, Perylene und Perinone; Fluoreszenz- und Phosphoreszenzpigmente; und organische Schwarzpigmente.

Beispiele für im Rahmen der vorliegenden Erfindung geeignete Füllstoffe sind Silikate wie beispielsweise natürliche Kieselsäuren, zum Beispiel Quarz, Cristobalit und Quarzgut, Kieselgur, Talk, Kaolin, Glimmer, Feldspat und Nephelinsyenit, Plastorit, Perlite, Asbest, Hornblende, Wollastonit und Kieselerde; synthetische Kieselsäuren und Silkate wie beispielsweise pyrogenes Siliciumdioxid, Fällungskieselsäuren, Natriumaluminiumsilikate, Calciumsilikate, plättchenförmige Kieselsäuren, hydrothermale Kieselsäuren, Schichtsilikate, Kieselgele, Aerogele, Kieselsole, beispielsweise Hydrosole und Organosol, und Glas; Carbonate als Füllstoffe wie beispielsweise natürliche Calciumcarbonatprodukte, gefälltes Calciumcarbonat, Dolomit, Bariumcarbonat und Magnesiumcarbonat; Sulfate wie beispielsweise, Bariumsulfat, Bohrspat, Chemiespat, Füllstoffspat und Blanc Fixe, Calciumsulfat; Aluminiumoxid und Aluminiumhydroxid; Siliciumcarbid, Flussspat, Schiefermehl und Graphit.

Beispiele für im Rahmen der vorliegenden Erfindung geeignete Erscheinungsformen des Kohlenstoffs, soweit sie nicht bereits unter dem Begriff der Pigmente oder Füllstoffe aufgeführt sind, sind beispielsweise amorpher Kohlenstoff, Kohlenstoff-Fasern, Glaskohlenstoff, Graphen, Fullerene, Diamant, Lonsdaleit, Aktivkohle, Kohlenstoffnanoröhren, Carbon Nanobuds, Kohlenstoffnanoschaum und Aerographit.

Weitere Beispiele für Pigmente und Füllstoffe finden sich beispielsweise im "Lehrbuch der Lacke und Beschichtungen" von Kittel, Bd. 5, aus dem S. Hirzel Verlag, 2003, 2. Auflage, "Pigmente, Füllstoffe, Farbmetrik".

Im Übrigen kann das Kammcopolymer auch als Emulgator und Phasenvermittler (Verträglichkeitsvermittler flüssig/flüssig) eingesetzt werden.

Nachstehend soll die Erfindung anhand von Ausführungsbeispielen näher erläutert werden.

## BEISPIELE

### Messverfahren

Aminzahl

Unter der Aminzahl (AZ) wird die Menge KOH in mg verstanden, die dem Aminanteil von 1g Substanz entspricht. Die Aminzahl wird nach DIN 16945 durch eine Neutralisationsreaktion mit 0,1 n Perchlorsäure in Essigsäure als Titationsmittel bestimmt:

$$R\text{-}NH_2 + HClO_4 \longrightarrow R\text{-}NH_3^{\oplus}ClO_4^{\ominus}$$

Die Zugaben inerter Lösemittel, wie Cyclohexan, Dioxan, Chlorbenzol, Aceton, Methylethylketon können die Titration sehr schwacher Basen verbessern.

Epoxyäquivalent

Unter dem Epoxid-Equivalentgewicht wird diejenige Menge Epoxidharz in g verstanden, die 16g epoxidisch gebundenen Sauerstoff (Epoxid-Sauerstoff) enthält. Die Epoxidgruppen in Epoxidharzen lassen sich durch Addition von HBr an den Epoxidring bestimmen. Die equivalente Menge HBr wird dabei durch Titration mit $HClO_4$ in Gegenwart von Cetyltrimethylammoniumbromid (N,N,N-trimethyl-1-hexadecanaminiumbromid; CTABr) freigesetzt.

Da bei der Titration mit Perchlorsäure auch gleichzeitig das Amin protoniert wird, muss diese Menge an Perchlorsäure zur Berechnung des Epoxyäquivalents abgezogen werden. Daher ist es notwendig vor der Bestimmung des Epoxyäquivalents die Aminzahl zu bestimmen.

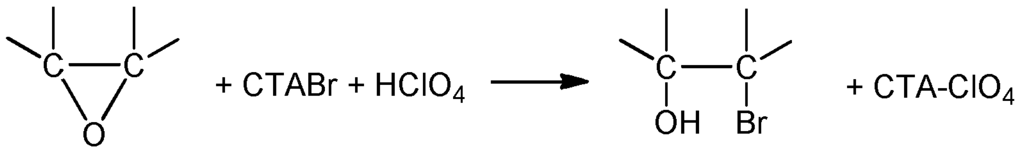


$$\text{Epoxidäquivalent} = \text{Einwaage (gr.)} * 1000 / (\text{Verbrauch (ml)} * n * f) - (\text{Aminzahl}/56{,}1)$$

n = Normalität des Titrationsmittels
f = Faktor des Titrationsmittels

Säurezahl

Die Säurezahl wird nach DIN EN ISO 2114 durch eine Neutralisationsreaktion mit 0,1 n KOH in Ethanol als Titrationsmittel bestimmt:

$$R\text{-}COOH + KOH \longrightarrow R\text{-}COOK + H_2O$$

**Vergleichsbeispiele**

**Polymer 1**

82 g Epikote 828 (0,07 mol; unverdünntes difunktionelles Bisphenol-A-Epichlorhydrin-Umsetzungsprodukt, Hersteller Momentive) werden mit 528 g Surfonamin L 207 (0,085 mol; methanolgestartetes Polyethermonoamin mit endständiger primärer Aminogruppe, ca. 10 OPr- und 31 OEt-Einheiten; Aminzahl = 27 mg KOH/g; Hersteller Huntsman) bei 140°C 27 h zur Reaktion gebracht.

Aminzahl: 19,6 mg KOH/g
Epoxyäquivalent: unendlich

**Polymer 2**

82 g Epikote 828 (0,22 mol) werden mit 359 g Surfonamin L 207 (0,177 mol) und 8,6 g Dimethylaminopropylamin (0,08 mol) bei 140°C 7 h zur Reaktion gebracht. Anschließend werden 145 g eines Polyether-Toluylendiisocyanat-Addukts (Herstellung siehe unten) hinzugegeben und bei 65°C weitere 5 h reagieren lassen.

Aminzahl: 21,7 mgKOH/g
Epoxyäquivalent: unendlich
Isocyanatgehalt: 0,05%

Herstellung des Polyether-Toluylendiisocyanat-Addukts:
In einem mit Rührer, Thermometer, Tropftrichter, Rückflusskühler und Stickstoffeinleitungsrohr versehenen Vierhalskolben werden 43 g Desmodur T 100 (ca. 100% 2,4-Toluylendiisocyanat, NCO-Gehalt = 48,8) und 0,7g Benzoylchlorid

vorgelegt und gut durchmischt. 200 g MPEG 2000, die wasserfrei und bei Polyethern alkalifrei ist, werden langsam zudosiert, so dass die Temperatur 55 °C nicht übersteigt. Das Gemisch wird nach der Zudosierung weitere 3 Stunden bei 55°C gerührt. Das überschüssige TDI wird mittels Dünnschichtverdampfer bei 150 °C aus dem Reaktionsgemisch entfernt. Der Rest-TDI-Gehalt beträgt < 1 %.

**Polymer 3**

82 g (0,22 mol) Epikote 828 werden mit 323 g Surfonamin L 207 (0,16 mol), 8,6 g Dimethylaminopropylamin (0,08 mol) und 36 g Polysiloxanmonamin (Beispiel 2 aus WO 2012/049186) bei 140°C 7 h zur Reaktion gebracht.

Aminzahl: 40,7 mg KOH/g
Epoxyäquivalent: unendlich

**Erfindunqsqemäße Beispiele**

**Polymer 4**

82 g Epikote 828 (0,22 mol) werden mit 359 g Surfonamin L 207 (0,177 mol) und 8,5 g Dimethylaminopropylamin (0,08 mol) bei 140°C 7 h zur Reaktion gebracht.

Aminzahl: 40,9 mg KOH/g
Epoxyäquivalent: unendlich

**Polymer 5**

82 g Epikote 828 (0,22 mol) werden mit 363 g Surfonamin L 200 (0,177 mol; methanolgestartetes Polyethermonoamin mit endständiger primärer Aminogruppe, ca. 4 OPr- und 41 OEt-Einheiten; Aminzahl = 25 mg KOH/g; Hersteller Huntsman) und 8,5 g Dimethylaminopropylamin (0,08 mol) bei 140°C 7 h zur Reaktion gebracht.

Aminzahl: 40,1 mg KOH/g
Epoxyäquivalent: unendlich

**Polymer 6**

41 g Epikote 828 (0,11 mol) und 25,3 g Hexamethylendiglycidether (0,11 mol) werden mit 359 g Surfonamin L 207 (0,177 mol) und 8,5 g Dimethylaminopropylamin (0,08 mol) bei 140°C 7 h zur Reaktion gebracht.

Aminzahl: 39,2 mg KOH/g
Epoxyäquivalent: unendlich

**Polymer 7**

449,5 g Polymer 4 wird mit 9 g Benzylchlorid (0,08 mol) in 305 g Wasser bei 100°C 4 h zur Reaktion gebracht. Aminzahl: 13,4 mg KOH/g

**Polymer 8**

449,5 g Polymer 4 wird mit 9,8 g Benzoesäure bei 50°C 4 h zur Reaktion gebracht.

Aminzahl: 40,0 mg KOH/g
Säurezahl: 19,8 mg KOH/g

**Polymer 9**

82 g Epikote 828 (0,22 mol) werden mit 359 g Surfonamin L 207 (0,177 mol), 6,4 g Dimethylaminopropylamin (0,06 mol) und 2,6 g Dibutylamin (0,02 mol) bei 140 °C für 7 h zur Reaktion gebracht.

Aminzahl: 39,1 mg KOH/g

Epoxyäquivalent: unendlich

## Anwendungstechnische Prüfung

Verwendung der erfindungsgemäßen Polymere als Netz- und Dispergiermittel zur Herstellung von Pigmentkonzentraten und deren Einsatz in Lacksystemen.

### Ausgangsstoffe

| | |
|---|---|
| BYK-011 | silikonfreier Entschäumer von BYK-Chemie |
| AMP 95 | 2-Amino-2-methyl-1-propanol von Angus Chemicals |
| Setalux 6801 AQ-24 | wässriges Acrylatbindemittel von Nuplex Resins |
| Setalux 6802 AQ-24 | wässriges Acrylatbindemittel von Nuplex Resins |
| BYK-347 | silikonhaltiges Oberflächenadditiv von BYK-Chemie |
| BYK-348 | silikonhaltiges Oberflächenadditiv von BYK-Chemie |
| BYK-425 | Rheologiesteuerungsmittel von BYK-Chemie |
| PPG 600 | Difunktionelles Polypropylenglycol von BASF |
| Decklack FF99-0364 Pro Gloss | 2K-Polyurethanbindemittel von BASF |
| Glossodur | Isocyanathärter von BASF |
| Carbon Black FW 200 | Rußpigment von Orion |
| Carbon Black XPB 255 | Rußpigment von Orion |
| Raven 5000 Ultra III | Rußpigment von Birla Carbon |
| Heliogen blau L7101F | Phthalocyaninpigment von BASF |
| Hostaperm Rosa E | Quinacridonpigment von Clariant |
| Laropal A 81 | Aldehydharz von BASF |
| Macrynal SM 510 | hydroxyfunktionelles Acrylatbindemittel von Allnex |
| Shellsol A | aromatisches Kohlenwasserstoffgemisch von Shell |
| BYK-066N | Silikonhaltiger Entschäumer von BYK-Chemie |
| BYK-306 | Silikonhaltiges Oberflächenadditiv von BYK-Chemie |
| Desmodur N 3390 BA | aliphatisches Polyisocyanat von Bayer Material Science |
| Synthalat E405 | Aldehydharz von Synthopol |
| NC Chips E510 ESO | Nitrocellulose von Dow Wolff Cellulosics |
| BYK-052 | Silikonfreier Entschäumer von BYK-Chemie |
| PMA | Methoxypropylacetat |

Herstellung und Prüfung von pigmentierten wässrigen Lacken mit Rußpigmenten

| Pigmentkonzentrat | |
|---|---|
| Wasser | 64 |
| Netz- und Dispergiermittel | 10,5 |
| Byk-011 | 0,5 |
| AMP 95 | 10 |
| Pigment | 15 |
| | 100,00 |

Die Dispergierung erfolgte mit einem Lau Paint Shaker DAS H [/A]200-K. Das Verhältnis Mahlgut-zu-Glasperlen (1 mm Durchmesser) betrug 1:2 (Gewichtsteile), 300 min, Kühlstufe 3, normale Geschwindigkeit.

| Lack | |
|---|---|
| Setalux 6801 AQ-24 | 240 |
| Setalux 6802 AQ-24 | 450 |
| Byk-028 | 6 |
| Dimethylaminoethanol, 10%ig in Wasser | 28 |
| Wasser | 255 |
| BYK-347 | 6 |
| BYK-348 | 5 |
| BYK-425 /PPG600 / Wasser 2:1:7 | 10 |
| | 1000,00 |

| Auflackung | |
|---|---|
| Pigmentkonzentrat | 10 |
| Lack | 100 |
| | 110,00 |

Das Pigmentkonzentrat wird mit dem Lack 5 min gerüttelt.

Das pigmentierte Auflackgut wurde mit einer 120 μm-Spiralrakel auf Kontrastkarton aufgetragen und der Lack wurde nach dem Ablüften für 15 min bei 80°C zwischengetrocknet.

Anschließend wurde der Decklack FF99-0364 Pro Gloss, gemischt 100:33 mit dem Härter Glossodur, mit einer 120 μm-Spiralrakel appliziert und nach dem Ablüften für 15min bei 100°C durchgetrocknet.

Die Viskositätsmessungen wurden mit dem Gerät Stresstech von Reologica Instruments AB durchgeführt. Hierbei fand das Zylindermesssystem CC 25 Verwendung. Die Ausgleichszeit vor Messbeginn betrug 5 s. Es wurden 12 Messpunkte bei einer Scherrate von 100 1/s mit einer Gesamtmessdauer von 48 s bei einer Messtemperatur von 25°C aufgenommen. Der angegebene Viskositätswert ist der Mittelwert der letzten 10 Messpunkte.

Als Maß für die "Jetness" wurden die XYZ-Werte mittels Color Guide 45°/0° bei Lichtart D65/10° gemessen. Diese werden dann mit folgender Formel in Mc, My und dM Werte umgerechnet:

$$My = 100\log\left[\frac{1}{Y}\right]; Mc = 100\left\{\log\left[\frac{Xn}{X}\right] - \log\left[\frac{Zn}{Z}\right] + \log\left[\frac{Yn}{Y}\right]\right\}; dM = Mc - My$$

Eine gute Jetness zeichnet sich durch einen hohen Mc-Wert aus. Zusätzlich ist ein hoher Blauanteil gewünscht, der durch einen hohen dM-Wert charakterisiert ist.

**Ergebnisse Ruß/Wasser**

Carbon Black FW 200

| **Netz- und Dispergiermittel** | **Viskosität** sofort | **Viskosität** 7 d / 40°C | **Mc** | **dM** |
|---|---|---|---|---|
| Polymer 1 | 61 mPas | 62 mPas | 288 | 13 |
| Polymer 2 | 54 mPas | 70 mPas | 282 | 12 |
| Polymer 3 | 62 mPas | 68 mPas | 292 | 13 |
| Polymer 4 | 51 mPas | 61 mPas | 293 | 15 |

Carbon Black XPB 255

| **Netz- und Dispergiermittel** | **Viskosität** sofort | **Viskosität** 7 d / 40°C | **Mc** | **dM** |
|---|---|---|---|---|
| Polymer 1 | 51 mPas | 58 mPas | 308 | 19 |
| Polymer 2 | 65 mPas | 56 mPas | 316 | 20 |
| Polymer 3 | 48 mPas | 57 mPas | 209 | 14 |
| Polymer 4 | 40 mPas | 47 mPas | 318 | 22 |

Raven 5000 Ultra III

| **Netz- und Dispergiermittel** | **Viskosität** sofort | **Viskosität** 7 d / 40°C | **Mc** | **dM** |
|---|---|---|---|---|
| Polymer 1 | 38 mPas | 56 mPas | 318 | 22 |
| Polymer 2 | 41 mPas | 47 mPas | 324 | 22 |
| Polymer 3 | 31 mPas | 42 mPas | 322 | 20 |
| Polymer 4 | 31 mPas | 38 mPas | 327 | 22 |

Für alle drei wässrigen Lacke, enthaltend unterschiedliche Rußpigmente, konnte gezeigt werden, dass erfindungsgemäß mit dem Polymer 4 die beste Jetness (höchster Wert für Mc) erhalten wird und gleichzeitig ein hoher Blauanteil (höchster Wert für dM) vorliegt.

Herstellung und Prüfung von pigmentierten wässrigen Lacken mit organischen Pigmenten

| Pigmentkonzentrat | |
|---|---|
| Wasser | 62 |
| Netz- und Dispergiermittel | 7,5 |
| Byk-011 | 0,5 |
| Pigment | 30 |
| | 100,00 |

Dispergierung mit Lau Paint Shaker DAS H [/A]200-K: Verhältnis Mahlgut zu Glasperlen (1 mm Durchmesser): 1 : 2 (Gewichtsteile), 300 min, Kühlstufe 3, normale Geschwindigkeit.

| Lack | |
|---|---|
| Setalux 6801 AQ-24 | 240 |
| Setalux 6802 AQ-24 | 450 |
| Byk-028 | 6 |
| Dimethylethanolamin, 10%ig in Wasser | 28 |
| Wasser | 255 |
| BYK-347 | 6 |
| BYK-348 | 5 |

(fortgesetzt)

| Lack | |
|---|---|
| BYK-425 /PPG600 / Wasser 2:1:7 | 10 |
| | 1000,00 |

| Auflackung | |
|---|---|
| Pigmentkonzentrat | 10 |
| Lack | 100 |
| | 110,00 |

Das Pigmentkonzentrat wird mit dem Lack 5 min gerüttelt.

Das pigmentierte Auflackgut wird mit einer 50 µm-Spiralrakel auf einer Polyethylenfolie aufgetragen. Der Lack wurde nach dem Ablüften 16 h bei Raumtemperatur getrocknet.

Glanz Messung:

| | |
|---|---|
| Gerät: | Micro-TRI-Gloss, BYK Gardner |
| Winkel: | 20° |
| Anzahl der Messungen: | n = 3 |

Die Transparenz wird visuell beurteilt: 1 = gut, 5 = schlecht.

Die Transparenz ist die Lichtdurchlässigkeit und lässt sich bei Beschichtungen, die auf transparenten Folien aufgetragen wurden, durch die optische Schärfe von Objekten, die sich vom Betrachter hinter der Folie befinden, beurteilen.

**Ergebnisse organische Pigmente/Wasser**

Heliogen blau L7101F

| **Netz- und Dispergiermittel** | **Viskosität** sofort | **Viskosität** 7 d / 40°C | **Glanz 20°** | **Transparenz** |
|---|---|---|---|---|
| Polymer 1 | 68 mPas | 64 mPas | 55,1 | 1-2 |
| Polymer 2 | 68 mPas | 110 mPas | 53,8 | 1-2 |
| Polymer 3 | 64 mPas | 62 mPas | 37,3 | 3 |
| Polymer 4 | 55 mPas | 55 mPas | 56,6 | 1 |

Hostaperm Rosa E

| **Netz- und Dispergiermittel** | **Viskosität** sofort | **Viskosität** 7 d / 40°C | **Glanz 20°** | **Transparenz** |
|---|---|---|---|---|
| Polymer 1 | 122 mPas | 147 mPas | 43,7 | 1-2 |
| Polymer 2 | 65 mPas | 56 mPas | 43,6 | 2 |
| Polymer 3 | 411 mPas | 491 mPas | 45,6 | 3 |
| Polymer 4 | 263 mPas | 293 mPas | 46,1 | 1-2 |

Herstellung und Prüfung von pigmentierten lösemittelhaltigen Lacken mit Rußpigmenten

| Pigmentkonzentrat | |
|---|---|
| Laropal A 81 | 27,8 |
| PMA | 50 |
| Netz- und Dispergiermittel | 9,2 |
| Pigment | 13 |
| | 100,00 |

Dispergierung mit Lau Paint Shaker DAS H [/A]200-K: Verhältnis Mahlgut zu Glasperlen (1 mm Durchmesser): 1 : 2 (Gewichtsteile), 300 min, Kühlstufe 3, normale Geschwindigkeit.

| Lack | |
|---|---|
| Macrynal SM 510 (70% in Butyl acetate) | 750 |
| PMA | 50 |
| Shellsol A | 50 |
| Xylol | 66 |
| Butylacetat | 80 |
| BYK-066N | 3 |
| BYK-306 | 1 |
| | 1000,00 |

| Härter | |
|---|---|
| Desmodur N 3390 BA | 50 |
| Butylacetat | 35 |
| Xylol | 10 |
| | 100,00 |

| Auflackung | |
|---|---|
| Pigmentkonzentrat | 6 |
| Lack | 20 |
| Härter | 10 |
| | 36 |

Das Pigmentkonzentrat wird mit dem Lack und dem Härter 5 min gerüttelt.

Das pigmentierte Auflackgut wird mit einer 120 μm-Spiralrakel auf Kontrastkarton aufgetragen. Trocknung: 16 h bei Raumtemperatur.

**Ergebnisse Ruß/Lösemittel**

Carbon Black FW 200

| **Netz- und Dispergiermittel** | **Viskosität** sofort | **Viskosität** 7 d / 40°C | **Mc** | **dM** |
|---|---|---|---|---|
| Polymer 1 | 109 mPas | 183 mPas | 313 | 8 |
| Polymer 2 | 101 mPas | 156 mPas | 313 | 8 |
| Polymer 3 | 93 mPas | 157 mPas | 317 | 10 |
| Polymer 4 | 83 mPas | 156 mPas | 320 | 12 |

Carbon Black XPB 255

| **Netz- und Dispergiermittel** | **Viskosität** sofort | **Viskosität** 7 d / 40°C | **Mc** | **dM** |
|---|---|---|---|---|
| Polymer 1 | 75 mPas | 2500 mPas | 324 | 1 |
| Polymer 2 | 72 mPas | 10200 mPas | 323 | 7 |
| Polymer 3 | 112 mPas | 23400 mPas | 316 | 0 |
| Polymer 4 | 7 mPas | 86 mPas | 331 | 9 |

Raven 5000 Ultra III

| **Netz- und Dispergiermittel** | **Viskosität** sofort | **Viskosität** 7 d / 40°C | **Mc** | **dM** |
|---|---|---|---|---|
| Polymer 1 | 78 mPas | 131 mPas | 342 | 10 |
| Polymer 2 | 73 mPas | 7100 mPas | 329 | 7 |
| Polymer 3 | 70 mPas | 156 mPas | 323 | 7 |
| Polymer 4 | 65 mPas | 142 mPas | 352 | 12 |

Für alle drei lösemittelbasierten Lacke, enthaltend unterschiedliche Rußpigmente, konnte gezeigt werden, dass erfindungsgemäß mit dem Polymer 4 die beste Jetness (höchster Wert für Mc) erhalten wird und gleichzeitig ein hoher Blauanteil (höchster Wert für dM) vorliegt.

Herstellung und Prüfung von pigmentierten lösemittelhaltigen Lacken mit organischen Pigmenten

| Pigmentkonzentrat | |
|---|---|
| Laropal A 81 | 17 |
| PMA | 62,4 |
| Netz- und Dispergiermittel | 5,4 |
| Pigment | 15,2 |
| | 100,00 |

Dispergierung mit Lau Paint Shaker DAS H [/A]200-K: Verhältnis Mahlgut zu Glasperlen (1 mm Durchmesser): 1:2 (Gewichtsteile), 300 min, Kühlstufe 3, normale Geschwindigkeit.

| Lack | |
|---|---|
| Synthalat E405, 60%ig in Xylol | 260 |
| NC Chips E510 ESO | 120 |
| Ethylacetat | 196 |
| Xylol | 185 |
| Butylacetat | 236 |
| BYK-052 | 2 |
| BYK-306 | 1 |
| | 1000,00 |

| Auflackung | |
|---|---|
| Pigmentkonzentrat | 25 |
| Lack | 100 |
| | 125,00 |

Das Pigmentkonzentrat wird mit dem Lack 5 min gerüttelt.

Das pigmentierte Auflackgut wird mit einer 50 μm-Spiralrakel auf eine Polyethylenfolie aufgetragen. Trocknung: 16 h bei Raumtemperatur.

**Ergebnisse organische Pigmente/Lösemittel**

Heliogen blau L7101F

| **Netz- und Dispergiermittel** | **Viskosität** sofort | **Viskosität** 7 d / 40°C | **Glanz 20°** | **Transparenz** |
|---|---|---|---|---|
| Polymer 1 | 19 Pas | 11 Pas | 99,1 | 2 |
| Polymer 2 | 19 Pas | 11 Pas | 97,4 | 1 |
| Polymer 3 | 20 Pas | 14 Pas | 92,3 | 2 |
| Polymer 4 | 18 Pas | 11 Pas | 100,0 | 1 |

Hostaperm Rosa E

| **Netz- und Dispergiermittel** | **Viskosität** sofort | **Viskosität** 7 d / 40°C | **Glanz 20°** | **Transparenz** |
|---|---|---|---|---|
| Polymer 1 | 52 Pas | 36 Pas | 75,3 | 2 |
| Polymer 2 | 32 Pas | 29 Pas | 78,8 | 2 |
| Polymer 3 | 38 Pas | 41 Pas | 74,1 | 3 |
| Polymer 4 | 31 Pas | 24 Pas | 79,5 | 1 |

## Patentansprüche

1. Verwendung eines Kammcopolymers als Netz- und Dispergiermittel, wobei das Kammpolymer herstellbar ist aus mindestens einem Diglycidylether (A) der allgemeinen Formel (I)

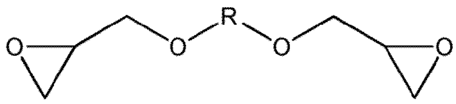

(I),

mindestens einem Polyethermonoamin (B) der allgemeinen Formel (II)

$R^t$-$[OEt]_n[OPr]_m[OBu]_s$-$NH_2$ (II),

mindestens einem Amin (C) der allgemeinen Formel (III)

Z-$R^1$-$NH_2$ (III),

und
gegebenenfalls mindestens einem, von primären Aminogruppen freien, sekundären Amin (D) der allgemeinen Formel (IV)

NHTV (IV)

wobei

R für einen epoxygruppenfreien Rest steht, gewählt aus aliphatischen Resten, aromatischen Resten und araliphatischen Resten,
$R^t$ für einen Rest gewählt aus Alkylresten mit 1 bis 6 Kohlenstoffatomen steht, OEt für einen Ethylenoxid-Rest, OPr für einen Propylenoxid-Rest und OBu für einen Butylenoxid-Rest steht,
n für eine Zahl von 0 bis 100, m für eine Zahl von 3 bis 50 und s für eine Zahl von 0 bis 20 steht und n+m+s = 3 bis 103 beträgt,
$R^1$ für einen aliphatischen, aromatischen oder araliphatischen Kohlenwasserstoffrest mit 1 bis 12 Kohlenstoffatomen steht, Z für einen von primären und sekundären Aminogruppen freien Rest mit mindestens einem basischen Stickstoffatom steht,
T und V keine sekundären Aminogruppen enthalten und unabhängig voneinander für aliphatische Reste mit 1 bis 12 Kohlenstoffatomen, aromatische Reste mit 6 bis 12 Kohlenstoffatomen oder araliphatische Reste mit 7 bis 12 Kohlenstoffatomen stehen, **dadurch gekennzeichnet, dass**
die molare Anzahl der Summe der primären Aminogruppen der Polyethermonoamine (B) und primären Aminogruppen der Amine (C) dividiert durch die molare Anzahl der Epoxy-Gruppen der Diglycidylether (A) einen Wert von 1/3 bis 3/4 ergibt,
wobei das Kammpolymer eine Struktur der allgemeinen Formel (V)

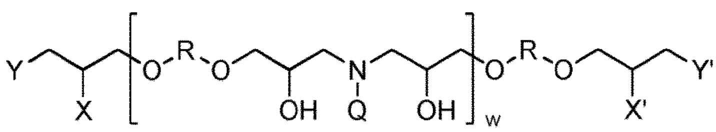

(V)

besitzt, worin
die w+1 Reste R unabhängig voneinander gewählt werden können,
einer der Reste Y und X für OH und der andere Rest für NHQ oder NTV steht einer der Reste Y' und X' für OH und der andere Rest für NHQ oder NTV steht, und die Reste Q unabhängig voneinander für
$Q^1 = R^t$-$[OEt]_n[OPr]_m[Bu]_s$ oder $Q_2$ = Z-$R^1$ stehen, und
w für eine Zahl von 1 bis 20 steht,
mit der Maßgabe, dass die Formel (V) mindestens einen Rest $Q^1$ und mindestens einen Rest $Q^2$ enthält.

2. Verwendung eines Kammcopolymers als Netz- und Dispergiermittel, wobei das Kammcopolymer erhältlich ist durch

Versalzung, Quarternisierung und/oder Amidierung eines Kammcopolymers gemäß Anspruch 1.

3. Verwendung gemäß Anspruch 1 oder 2, **dadurch gekennzeichnet, dass** die Netz- und Dispergiermittel zur Dispergierung von Rußen und/oder organischen Schwarzpigmenten dienen.

4. Verwendung gemäß Anspruch 3, wobei das Netz- und Dispergiermittel zur Erhöhung der Jetness dient.

5. Dispersion umfassend mindestens ein Dispergiermedium, mindestens eine Art eines dispergierten partikulären Feststoffs und mindestens ein Kammcopolymer nach einem der Ansprüche 1 oder 2.

6. Dispersion gemäß Anspruch 5, wobei die Kammcopolymere in einer Menge von 0,1 bis 10 Gew.-%, bezogen auf das Gesamtgewicht der Dispersion, enthalten sind.

7. Dispersion gemäß Anspruch 5 oder 6, **dadurch gekennzeichnet, dass** es sich bei der Dispersion um eine Tinte oder ein Beschichtungsmittel handelt.

8. Partikulärer Feststoff, **dadurch gekennzeichnet, dass** dieser mit einem Kammcopolymer gemäß einem der Ansprüche 1 oder 2 beschichtet ist.

9. Partikelzubereitung enthaltend 5,0 bis 99,9 Gew.% eines oder mehrerer partikulärer Feststoffe, **dadurch gekennzeichnet, dass** diese 0,1 bis 95,0 Gew.% der Kammcopolymere gemäß einem der Ansprüche 1 oder 2, bezogen auf das Gesamtgewicht der Partikelzubereitung, enthält.

10. Partikelzubereitung gemäß Anspruch 9, wobei es sich um Pulver, Chips, Granulate, Farbkonzentrate, Pigmentpasten, Volltonpasten, Nuancier- oder Abtönpasten oder Pigmentteige handelt.

**Claims**

1. Use of a comb polymer as wetting agent and dispersant, wherein the comb copolymer is preparable from at least one diglycidyl ether (A) of the general formula (I)

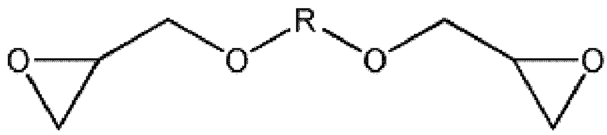

(I),

at least one polyether monoamine (B) of the general formula (II)

$R^t$-$[OEt]_n[OPr]_m[OBu]_s$-$NH_2$ (II),

at least one amine (C) of the general formula (III)

Z-$R^1$-$NH_2$ (III),

and o
ptionally at least one secondary amine (D) which is free of primary amino groups and is of the general formula (IV)

NHTV (IV)

where

R is a radical free of epoxy groups, selected from aliphatic radicals, aromatic radicals and araliphatic radicals, $R^t$ is a radical selected from alkyl radicals having 1 to 6 carbon atoms, OEt is an ethylene oxide radical, OPr is a propylene oxide radical and OBu is a butylene oxide radical,
n is a number from 0 to 100, m is a number from 3 to 50 and s is a number from 0 to 20 and n + m + s = 3 to 103, $R^1$ is an aliphatic, aromatic or araliphatic hydrocarbyl radical having 1 to 12 carbon atoms, Z is a radical which

is free of primary and secondary amino groups and has at least one basic nitrogen atom,
T and V do not contain any secondary amino groups and are independently aliphatic radicals having 1 to 12 carbon atoms, aromatic radicals having 6 to 12 carbon atoms or araliphatic radicals having 7 to 12 carbon atoms,
**characterized in that**
the molar number of the sum total of the primary amino groups of the polyether monoamines (B) and primary amino groups of the amines (C), divided by the molar number of epoxy groups of the diglycidyl ethers (A), gives a value of 1/3 to 3/4,
wherein the comb polymer has a structure of the general formula (V)

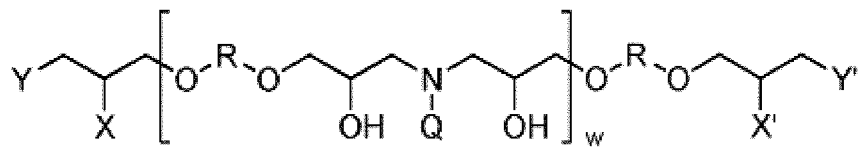

(V)

in which
the w+1 R radicals may be selected independently of one another,
one of the Y and X radicals is OH and the other radical is NHQ or NTV, one of the Y' and X' radicals is OH and the other radical is NHQ or NTV, and Q radicals are independently
$Q^1 = R^t\text{-}[OEt]_n[OPr]_m[OBu]_s$ or $Q^2 = Z\text{-}R^1$, and
w is a number from 1 to 20,
with the proviso that the formula (V) contains at least one $Q^1$ radical and at least one $Q^2$ radical.

2. Use of a comb polymer as wetting agent and dispersant, wherein the comb copolymer is obtainable by salt conversion, quaternization and/or amidation of a comb copolymer according to Claim 1.

3. Use according to Claim 1 or 2, **characterized in that** the wetting agents and dispersants serve for dispersion of carbon blacks and/or organic black pigments.

4. Use according to Claim 3, wherein the wetting agent and dispersant serves to increase jetness.

5. Dispersion comprising at least one dispersion medium, at least one kind of dispersed particulate solid and at least one comb copolymer according to either of Claims 1 and 2.

6. Dispersion according to Claim 5, wherein the comb copolymers are present in an amount of 0.1% to 10% by weight, based on the total weight of the dispersion.

7. Dispersion according to Claim 5 or 6, **characterized in that** the dispersion is an ink or a coating composition.

8. Particulate solid, **characterized in that** it has been coated with a comb copolymer according to either of Claims 1 and 2.

9. Particle formulation containing 5.0% to 99.9% by weight of one or more particulate solids, **characterized in that** it contains 0.1% to 95.0% by weight of the comb copolymers according to either of Claims 1 and 2, based on the total weight of the particle formulation.

10. Particle formulation according to Claim 9, comprising powder, chips, granules, color concentrates, pigment paste, full tone pastes, shading or tinting pastes or pigment pastes.

**Revendications**

1. Utilisation d'un copolymère en peigne en tant qu'agent mouillant et agent de dispersion, le polymère en peigne pouvant être préparé à partir d'au moins un éther de diglycidyle (A) de formule générale (I)

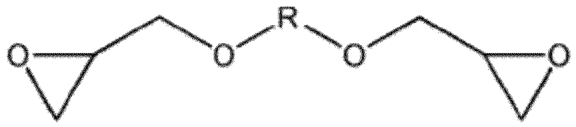

(I),

d'au moins une polyéthermonoamine (B) de formule générale (II)

$R^t\text{-}[OEt]_n[OPr]_m[OBU]_s\text{-}NH_2$ (II),

d'au moins une amine (C) de formule générale (III)

$Z\text{-}R^1\text{-}NH_2$ (III),

et

éventuellement d'au moins une amine secondaire (D), exempte de groupes amino primaire, de formule générale (IV)

NHTV (IV)

R représentant un radical exempt de groupes époxy, choisi parmi des radicaux aliphatiques, des radicaux aromatiques et des radicaux araliphatiques,

$R^t$ représentant un radical choisi parmi des radicaux alkyle comportant 1 à 6 atomes de carbone, OEt représentant un radical d'oxyde d'éthylène, OPr représentant un radical d'oxyde de propylène et OBu représentant un radical d'oxyde de butylène,
n représentant un nombre de 0 à 100, m représentant un nombre de 3 à 50 et s représentant un nombre de 0 à 20 et n + m + s = 3 à 103,
$R^1$ représentant un radical hydrocarboné aliphatique, aromatique ou araliphatique comportant 1 à 12 atomes de carbone, Z représentant un radical exempt de groupes amino primaire et secondaire comportant au moins un atome d'azote basique,
T et V ne contenant aucun groupe amino secondaire et représentant indépendamment l'un de l'autre des radicaux aliphatiques comportant 1 à 12 atomes de carbone, des radicaux aromatiques comportant 6 à 12 atomes de carbone ou des radicaux araliphatiques comportant 7 à 12 atomes de carbone,
**caractérisée en ce que**
le nombre molaire de la somme des groupes amino primaire des polyéthermonoamines (B) et des groupes amino primaire des amines (C) divisée par le nombre molaire des groupes époxy de l'éther de diglycidyle (A) donne une valeur de 1/3 à 3/4,
le polymère en peigne possédant une structure de formule générale (V)

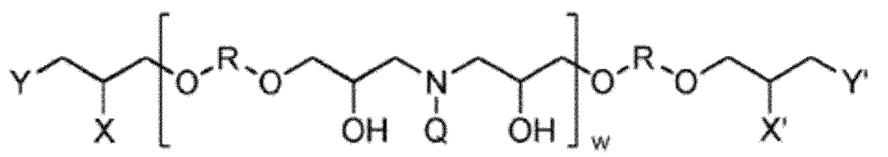

(V),

dans laquelle
les w + 1 radicaux R peuvent être choisis indépendamment les uns des autres,
l'un des radicaux Y et X représente OH et l'autre radical représente NHQ ou NTV, l'un des radicaux Y' et X' représente OH et l'autre radical représente NHQ ou NTV, et les radicaux Q représentent indépendamment les uns des autres

$$Q^1 = R^t\text{-}[OEt]_n[OPr]_m[Bu]_s \text{ ou } Q_2 = Z\text{-}R^1,$$

et
w représente un nombre de 1 à 20,
à la condition que la formule (V) contienne au moins un radical $Q^1$ et au moins un radical $Q^2$.

2. Utilisation d'un copolymère en peigne en tant qu'agent mouillant et agent de dispersion, le copolymère en peigne pouvant être obtenu par salification, quaternisation et/ou amidation d'un copolymère en peigne selon la revendication 1.

3. Utilisation selon la revendication 1 ou 2, **caractérisée en ce que** l'agent mouillant et l'agent de dispersion servent à la dispersion de suies et/ou de pigments organiques noirs.

4. Utilisation selon la revendication 3, l'agent mouillant et l'agent de dispersion servant à l'augmentation de la profondeur du noir.

5. Dispersion comprenant au moins un milieu de dispersion, au moins une sorte d'un matériau particulaire dispersé et au moins un copolymère en peigne selon l'une quelconque des revendications 1 et 2.

6. Dispersion selon la revendication 5, les copolymères en peigne étant contenus en une quantité de 0,1 à 10 % en poids, par rapport au poids total de la dispersion.

7. Dispersion selon la revendication 5 ou 6, **caractérisée en ce que** la dispersion est une encre ou un agent de revêtement.

8. Matériau particulaire, **caractérisé en ce que** celui-ci est revêtu par un copolymère en peigne selon l'une quelconque des revendications 1 et 2.

9. Préparation de particules contenant 5,0 à 99,9 % en poids d'un ou plusieurs matériaux particulaires, **caractérisée en ce que** celle-ci contient 0,1 à 95,0 % en poids des copolymères en peigne selon l'une quelconque des revendications 1 et 2, par rapport au poids total de la préparation de particules.

10. Préparation de particules selon la revendication 9, qui est une poudre, des copeaux, des granulés, des concentrés de couleur, des pâtes de pigments, des pâtes de tons directs, des pâtes de nuances ou des pâtes de pigments.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1486524 A1
- EP 1745104 A1
- WO 2012049186 A
- WO 2008092687 A1
- WO 2011070074 A1
- WO 2011070074 A

### In der Beschreibung aufgeführte Nicht-Patentliteratur

- Pigmente, Füllstoffe, Farbmetrik. **VON KITTEL.** Lehrbuch der Lacke und Beschichtungen. S. Hirzel Verlag, 2003, vol. 5